# EUROPEAN PATENT APPLICATION

(11) **EP 2 053 811 A1**
(43) Date of publication of application: **29.04.2009**
(21) Application number: 07764305.4
(22) Date of filing: 31.07.2007
(51) Int. Cl.: H04L 12/66

(54) **A MEDIA GETAWAY AND A STATISTICALLY REPORTING METHOD**

(30) Priority: 15.08.2006 CN 200610115873
(71) Applicant: Huawei Technologies Co., Ltd., Shenzhen, Guangdong Province 518129 (CN)
(72) Inventor: LIN, Yangbo, Shenzhen, Guangdong 518129 (CN)
(74) Representative: Thun, Clemens
(86) International application number: PCT/CN2007/070391
(87) International publication number: WO 2008/019610

(57) **Abstract**

The present invention relates to the communication field, and discloses an MG and a statistic reporting method thereof. The statistic reporting method includes: judging whether the current statistic parameter value meets the reporting condition when the statistic parameter value changes; if the value meets the reporting condition, reporting the current statistic parameter value and/or the corresponding event to the MGC, thus meeting different statistic and monitoring requirements more flexibly and efficiently. The MGC sends an event parameter to the MG beforehand, and transfers the reporting condition through the event parameter or its sub-parameter; or the MG presets the reporting condition. The reporting condition may be: (i) to report the statistic parameter value when the value deviates from the preset target value and/or resumes the preset target value; or (ii) to report the statistic parameter value when the value overruns the preset target value; or (iii) to report the statistic parameter value when the value enters and/or leaves the preset target value interval; or (iv) any combination thereof.

## Description

This application claims a priority from the Chinese Patent Application No. 200610115873.2, filed with the Chinese Patent Office on August 15, 2006 and entitled "Media Gateway and Statistic Reporting Method", the contents of which are incorporated herein by reference in their entirety.

### Field of the Invention

The present invention relates to the communication field, and in particular, to a technology for a media gateway (MG) to report to a media gateway controller (MGC).

### Background of the Invention

Among the news about the latest development of communication technologies, the next generation network (NGN) and 3rd generation (3G) are most attractive ones undoubtedly.

In the evolution of the NGN, the definition of the NGN has been changing continuously. In the "Global NGN Summit 2004" organized by the International Telecommunication Union (ITU), the NGN is defined as a packet-based network that provides various services such as telecom services and can use many types of broadband transmission technologies with quality of service (QoS) assurance. This definition specifies the ultimate orientation and scope of the NGN.

In the current NGN deployment, basically, the media gateway controller (MGC) and the media gateway (MG) are two key components for building an NGN. The MGC is responsible for the call control function, and the MG is responsible for the service bearer function, thus separating the call control plane from the service bearer plane. The MGC and the MG can evolve independently. Therefore, the network resources are shared sufficiently, the equipment upgrade and the service extension are simplified, and the costs of development and maintenance are greatly reduced.

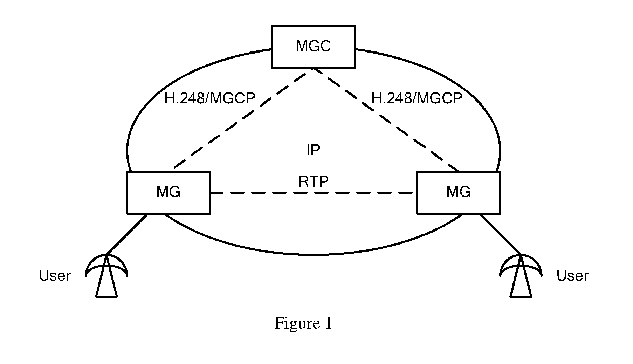

The media gateway control protocol is a main protocol for communication between the MG and the MGC. The widely used protocols are H.248/Gateway Control Protocol (MeGaCo) and Media Gateway Control Protocol (MGCP). The protocol generally used for communication between MGs is the Real-time Transfer Protocol (RTP), as shown in Figure 1.

The MGCP protocol was formulated by the Internet Engineering Task Force (IETF) in October 1999 and revised in January 2003; the H.248/MeGaCo protocol was formulated by the IETF and the ITU in November 2000 and revised in June 2003; the H.248/MeGaCo R2 protocol was formulated by the ITU in May 2002 and revised in March 2004; and the H.248/MeGaCo R3 protocol was released by the ITU in September 2005.

For the H.248/MeGaCo protocol, eight basic commands are applicable between the MGC and the MG: Add, Modify, Subtract, Move, AuditValue, AuditCapabilities, Notify, and ServiceChange.

For the MGCP protocol, nine basic commands are applicable between the MGC and the MG: NotificationRequest (RQNT), Notify (NTFY), CreateConnection (CRCX), ModifyConnection (MDCX), DeleteConnection (DLCX), AuditEndpoint (AUEP), AuditConnection (AUCX), ReStartInProgress (RSIP), and EndpointConfiguration (EPCF).

The H.248/MeGaCo protocol derives from the MGCP. Taking the H.248 protocol as an example, the MG bears a service by using the resources on the MG. Such resources are referred to as terminations abstractly. Terminations are categorized into physical terminations and ephemeral terminations. Physical terminations are physical entities that exist semi-permanently, for example, time division multiplex (TDM) paths; and ephemeral terminations represent the public resources which are requested for an ephemeral purpose and released soon after being used, for example, RTP streams. The combinations between terminations are abstractly referred to as contexts. As a context may include multiple terminations, a topology is used to describe the interrelations between terminations. The termination which has not correlated with any other termination yet is contained in a special context called a null context.

Based on the abstract model of the foregoing protocol, a call connection is actually an operation on the termination and the context. Such operations are performed through command requests and replies between the MGC and the MG. Command parameters, also known as descriptors, are categorized into Property, Signal, Event, and Statistic.

More particularly, "Property" refers to the specifications of resource requirements, and is generally sent by the MGC to the MG, or set by the MG, for example, the maximum value and minimum value of jitter buffer; "Signal" is used by the MGC to instruct the MG to perform resource operations, for example, to play a dialing tone, a ringback tone or a busy tone to a user; "Event" is used by the MGC to instruct the MG to monitor the states, for example, monitor the states, e.g., off-hook, hang-up, dialing and flash-hook, of a user; and "Statistic" indicates the state of resource utilization, the MG performs calculation, and the MGC may enable or disable (i.e. activate or deactivate) the parameters selectively. The parameters with service relevance are logically aggregated into a package.

Currently, an MGC obtains the current values of the statistic parameters on the MG in two ways:

(i) The MGC sends a request command (AuditValue or Subtract) to the MG, and specifies clearly or by default the expected statistic parameter value, and then the MG returns the current value of the statistic parameter to the MGC through a reply command.

(ii) The MGC specifies the conditions for reporting a statistic parameter to the MG, or the MG presets such conditions. When the current value of the statistic parameter meets the conditions, the MG reports the current value of the statistic parameter to the MGC through a Notify request command.

The "conditions" mentioned in the second method are primarily the reporting conditions based on time change, for example, duration and period. Reporting based on a duration condition means that the statistic parameter value should be reported upon expiry of a preset duration; reporting based on a period condition means that the statistic parameter value should be reported at preset intervals. If the reporting is based on both duration and period, the statistic parameter value is reported in the preset duration at preset intervals. However, it is impossible to meet different statistic and monitoring requirements in various application scenarios if the reporting of statistic parameter values is based on time change only. Diversified application scenarios require more pertinent reporting conditions, for example, reporting based on parameter value change, whereas reporting based on parameter value change has not been proposed in the prior art.

### Summary of the Invention

Embodiments of the present invention provide an MG and a statistic reporting method to meet different statistic and monitoring requirements more flexibly and efficiently.

An MG statistic reporting method provided in an embodiment of the present invention includes:
judging whether the current statistic parameter value meets the reporting condition when a statistic parameter value on the MG changes; if the value meets the reporting condition, reporting the current statistic parameter value and/or the event corresponding to the reporting condition to the MGC.

An MG provided in an embodiment of the present invention includes:
a reporting module, adapted to report statistic parameter values or events to the MGC; and
a judging module, adapted to: judge whether the current statistic parameter value meets the reporting condition when the statistic parameter value changes; if the value meets the reporting condition, instruct the reporting module to report the current statistic parameter value and/or the event corresponding to the reporting condition to the MGC.

Comparison shows that the technical solution of the present invention differs from the prior art in the following aspects: judging whether the current statistic parameter value meets the reporting condition when the statistic parameter value changes; if the value meets the reporting condition, reporting the current statistic parameter value and/or the corresponding event to the MGC, thus meeting different statistic and monitoring requirements more flexibly and efficiently.

The reporting condition may be a combination of the preceding multiple reporting conditions, or be combined with a time change-based reporting condition. For example, if the reporting condition is used concurrently with the duration condition, the reporting of the statistic parameter value is performed within the duration and depends on the foregoing reporting conditions, thus meeting different statistic and monitoring requirements more flexibly and efficiently, so as to meet the needs of different application scenarios.

### Brief Description of the Drawings

Figure 1 shows the networking diagram of the MGC and the MG in the prior art;

Figure 2 is a flowchart of an MG statistic reporting method according to a first embodiment of the present invention; and

Figure 3 shows the system architecture of the MG according to a fifth embodiment of the present invention.

### Detailed Description of the Embodiments

For better understanding of the objective, technical solution and merits of the present invention, the present invention is hereinafter described in detail with reference to accompanying drawings and exemplary embodiments.

The method provided in an embodiment of the present invention includes: the MGC sends a reporting condition to the MG beforehand, or the MG presets the reporting condition; the MG judges whether the current statistic parameter value meets the reporting condition when the statistic parameter value changes; if the value meets the reporting condition, the MG reports the current statistic parameter value and/or the corresponding event to the MGC; depending on the reporting condition, the MG may report in different ways, thus meeting different statistic and monitoring requirements more flexibly and efficiently.

The MG statistic reporting method according to the first embodiment of the present invention is described below.

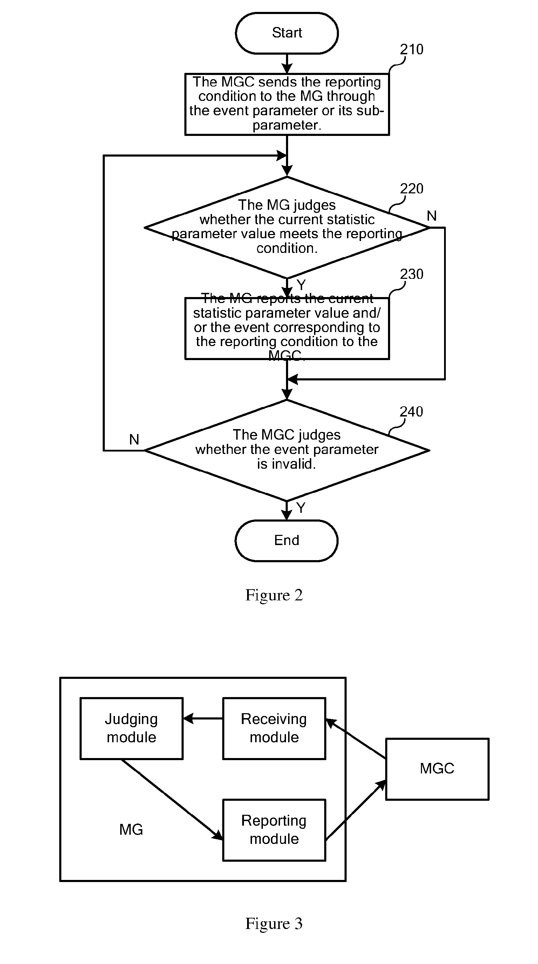

As shown in Figure 2, in step 210, the MGC sends an event parameter to the MG, with the sub-parameter of the event parameter carrying the reporting condition of the statistic parameter value. The reporting condition indicates reporting the statistic parameter value when the value deviates from the preset target value or resumes the preset target value. More particularly, the reporting condition may be one or more of these items: deviating upward from the target value (i.e., the statistic parameter value becomes higher than the target value); deviating downward from the target value (i.e., the statistic parameter value becomes lower than the target value); resuming upward the target value (i.e., the statistic parameter value resumes the target value from a lower value); or resuming downward the target value (i.e., the statistic parameter value resumes the target value from a higher value). The target value may be the initial value of the statistic parameter or other specified values. The MGC defines the reporting condition in the event parameter or the sub-parameter of the event parameter, ensures successful transfer of the reporting condition, and enables the MG to report the statistic parameter values flexibly according to the reporting condition set by the MGC.

For example, the MGC may define an integer sub-parameter INTL (Initial) in the event parameter, for transferring the initial value of the statistic parameter; may define Boolean sub-parameters DVT (Deviate) and RSM (Resume), for controlling whether to report the statistic parameter value when the value deviates from or resumes the initial value respectively. If the initial value is "a" and the reporting condition is "to report the statistic parameter value when the value deviates from the initial value and not to report the statistic parameter value when the value resumes the initial value", the corresponding sub-parameter in the event parameter sent by the MGC to the MG is set to: {INTL=a, DVT=on,RSM=off}.

Moreover, the reporting condition may be further classified on the basis of "deviating upward", "deviating downward", "resuming upward", and "resuming downward". For example, the reporting condition may be: to report the statistic parameter value when the value deviates upward from the initial value and not to report the statistic parameter value in other scenarios. For transfer of the reporting condition, the DVT sub-parameter may be subdivided into DVTup and DVPdown, in which DVTup controls whether to report the statistic parameter value when the value deviates upward from the initial value and DVPdown controls whether to report the statistic parameter value when the value deviates downward from the initial value. Likewise, the RSM sub-parameter can be subdivided into RSMup and RSMdown, in which RSMup controls whether to report the statistic parameter value when the value resumes upward the initial value and RSMdown controls whether to report the statistic parameter value when the value resumes downward the initial value. Through itemized sub-parameters, the reporting conditions set by the MGC can better meet various statistic and monitoring requirements. It should be noted that the reporting condition may be sent by the MGC to the MG or preset by the MG.

In the subsequent step 220, the MG judges whether the current statistic parameter value meets the reporting condition from the MGC when the statistic parameter value changes. If the value meets the reporting condition, the process proceeds to step 230; otherwise, the process proceeds to step 240.

In step 230: The MG reports the current statistic parameter value and/or the event corresponding to the reporting condition to the MGC. For example, if the reporting condition sent by the MGC is "to report the statistic parameter value when the value deviates upward from the initial value or resumes the initial value upward", the MG reports the statistic parameter value and/or the corresponding event when the statistic parameter value changes from the initial value to a higher value; and reports the statistic parameter value and/or the corresponding event again when the statistic parameter value resumes the initial value from the higher value.

In the subsequent step 240, the MG judges whether the foregoing event parameter is invalid. If the event parameter is invalid, the process ends; otherwise, the process goes back to step 220, in which the MG continues judging whether the current statistic parameter value meets the reporting condition.

The MG statistic reporting method in the second embodiment is roughly the same as that in the first embodiment of the present invention except that: in the first embodiment, the reporting condition sent by the MGC to the MG is: to report the statistic parameter value when the value deviates from the preset target value and/or resumes the preset target value; while in the second embodiment, the reporting condition sent by the MGC to the MG is: to report the statistic parameter value when the value overruns the preset target value. The reporting condition of "overrunning the target value" may specifically be (i) "overrunning the target value in an ascending order (i.e., overrunning the target value in the process of changing from a lower value to a higher value)"; or (ii) "overrunning the target value in a descending order (i.e., overrunning the target value in the process of changing from a higher value to a lower value); or (iii) at least one of the above mentioned two conditions. For example, the reporting condition may be: to report the statistic parameter value when the value overruns the target value in an ascending order, and not to report the statistic parameter value when the value overruns the target value in a descending order. Besides, whether the situation that the statistic parameter value arrives at the target value exactly in the process of changing is deemed as "overrunning the target value" or not, can be predefined.

Therefore, according to the reporting condition, the MG reports the current statistic parameter value in time when the statistic parameter value fluctuates around the preset target value, so that the MGC can know the fluctuation of the parameter value in time and adjust the value accordingly. This reporting condition is suitable for the scenarios highly sensitive to stability of the statistic parameter value.

In this embodiment, the MGC also transfers the corresponding reporting condition through an event parameter or its sub-parameter. For example, when the target value is the average value, an integer AVRG (Average) sub-parameter is defined in the event parameter to store the average value; a Boolean OVRD (Override) sub-parameter is defined to control whether to report the statistic parameter value when the value overruns (direction-insensitive) the average value; if the average value needs to be reported in this case, the value of OVRD is "on"; otherwise, the value of OVRD is "off". To differentiate further the ascending order from the descending order, the OVRD sub-parameter may be subdivided into OVRDup and OVRDdown, in which OVRDup controls whether to report the statistic parameter value when the value overruns the preset target value in an ascending order and OVRDdown controls whether to report the statistic parameter value when the value overruns the target value in a descending order. Through itemized sub-parameters, the reporting conditions set by the MGC can better meet various statistic and monitoring requirements.

The MG statistic reporting method in the third embodiment is roughly the same as that in the first embodiment of the present invention except that: in the third embodiment, the reporting condition sent by the MGC to the MG is: to report the statistic parameter value when the value enters and/or leaves the preset target value interval. The target value interval in this reporting condition may be a fully closed interval, or a half closed interval. For example, the reporting condition may be defined as: to report the statistic parameter value when the value enters or leaves the [a, +∞] interval. This reporting condition may be: (i) to report the statistic parameter value when the value enters the preset target value interval only; or (ii) to report the statistic parameter value when the value leaves the preset target value interval only; or (iii) to report the statistic parameter value when the value enters and leaves the preset target value interval.

According to this reporting condition, the MG can timely report the current statistic parameter value when the statistic parameter value enters or leaves the preset target value interval. This reporting condition is applicable to the scenario where the statistic parameter value is expected to fall in a fixed interval.

As in the first and second embodiments, the MGC transfers the corresponding reporting condition through an event parameter or its sub-parameter in the third embodiment. For example, the MGC may define integer sub-parameters LL (Lower Limit) and UL (Upper Limit) in the event parameter, for representing an integer target interval; define Boolean sub-parameters OVRN (Overrun) and NRML (Normal), for controlling whether to report the statistic parameter value when the value leaves and enters the interval respectively. Meanwhile, the boundaries LL and UL are predefined in the target interval.

If the event parameter for statistic reporting sent by the MGC to the MG carries {LL=a, UL=b, OVRN=on, NRML=on}, the MG reports the statistic parameter value to the MGC when the value leaves or enters the [a, b] interval.

If the event parameter for statistic reporting sent by the MGC to the MG carries {LL=a, OVRN=off, NRML=on}, the MG reports the statistic parameter value to the MGC when the value enters the [a, +∞] interval and does not report when the value leaves the [a, +∞] interval.

The MG statistic reporting method in the fourth embodiment is roughly the same as that in foregoing three embodiments of the present invention except that: in the fourth embodiment, the reporting condition sent by the MGC to the MG is: (i) to report the statistic parameter value when the value deviates from the preset target value and/or resumes the preset target value; or (ii) to report the statistic parameter value when the value overruns the preset target value; or (iii) to report the statistic parameter value when the value enters and/or leaves the preset target value interval; or (iv) any combination thereof. For example, in the foregoing embodiment, the MGC may define integer sub-parameters INTL (Initial) and AVRG (Average) in the event parameter, for transferring the initial value and the average value of the statistic parameter; define Boolean sub-parameters DVT (Deviate) and RSM (Resume), for controlling whether to report the statistic parameter value when the value deviates from or resumes the initial value respectively; and define Boolean sub-parameter OVRD (Override), for controlling whether to report the statistic parameter value when the value overruns (direction-insensitive) the average value. Meanwhile, it is predefined that arriving at the target value is not deemed as overrunning.

Suppose that the event parameter for statistic reporting sent by the MGC to the MG carries {LL=a, UL=m, OVRN=on, NRML=on}, {LL=m, UL=n, OVRN=on, NRML=on}, {LL=n, UL=b, OVRN=on, NRML=on}, {INTL=i, DVT=on, RSM=on}, {AVRG=j, OVRD=on}, where *m* and *n* are two values that divide the [a, b] interval into three equal parts, *i* is any initial value of the statistic parameter in the [a, b] interval, and *j* is an average value of the statistic parameter in the [a, b] interval. Therefore, according to the reporting condition, the MG reports the statistic parameter value to the MGC in any of these scenarios: the statistic parameter value leaves or enters the [a, b] interval; the statistic parameter value goes across the three equal subintervals of the [a, b] interval; the statistic parameter value deviates from or resumes the initial value; or the statistic parameter value jumps above or below the average value. With the reporting conditions combined together, the MG can report the corresponding statistic parameter value or the corresponding event according to the change of the statistic parameter value; the MGC can know in detail changes of the statistic parameter value, and adjust the value flexibly to meet the requirements of various scenarios.

Therefore, in the embodiments of the present invention, the MGC sends an event parameter to the MG beforehand, and transfers the reporting condition through the event parameter or its sub-parameter; or the MG presets the reporting condition, so that the MG can report the statistic parameter value flexibly according to the reporting condition.

If the reporting condition is to report the statistic parameter value when the value deviates from the preset target value and/or resumes the preset target value, the MG reports the current statistic parameter value to the MGC and the MGC adjusts the value according to the change when the statistic parameter value deviates from or resumes the target value (for example, deviates from or resumes the initial value).

If the reporting condition is to report the statistic parameter value when the value overruns the preset target value, the MG reports the current statistic parameter value to the MGC in time when the statistic parameter value fluctuates around the preset target value; and the MGC can know the fluctuation of the statistic parameter value in time and adjust the value accordingly. This reporting condition is suitable for the scenarios highly sensitive to stability of the statistic parameter value.

If the reporting condition is to report the statistic parameter value when the value enters and/or leaves the preset target value interval, the MG can report the current statistic parameter value in time when the statistic parameter value enters or leaves the preset target value interval. This reporting condition is applicable to the scenario where the statistic parameter value is expected to fall in a fixed interval.

It should be noted that, in the embodiments of the present invention, the reporting conditions may be combined with the time change-based reporting conditions in accordance with the rules as follows: if the reporting conditions are combined with the duration condition, the MG decides whether to report the statistic parameter value within this duration according to the reporting conditions; the reporting conditions are independent of the period condition.

As shown in Figure 3, the MG according to the fifth embodiment of the present invention includes: a receiving module, adapted to receive the event parameter from the MGC, and obtain the reporting condition from the event parameter or its sub-parameter; a reporting module, adapted to report the statistic parameter value or event to the MGC; and a judging module, adapted to: judge whether the current statistic parameter value meets the reporting condition when the statistic parameter value changes, and, if the value meets the reporting condition, instruct the reporting module to report the current statistic parameter value and/or the event corresponding to the reporting condition to the MGC. The reporting condition is strictly followed to control the reporting of the statistic parameter value and/or the corresponding event. Therefore, the MG can report the statistic parameter value according to the requirements of the MGC completely, thus meeting the requirements of the MGC in different scenarios.

The reporting condition may be: (i) to report the statistic parameter value when the value deviates from the preset target value and/or resumes the preset target value; or (ii) to report the statistic parameter value when the value overruns the preset target value; or (iii) to report the statistic parameter value when the value enters and/or leaves the preset target value interval; or (iv) any combination thereof. The reporting conditions cover combinations of various scenarios, thus meeting different statistic and monitoring requirements more flexibly and efficiently and meeting the needs of various application scenarios.

Although the invention has been described through some exemplary embodiments and accompanying drawings, the invention is not limited to such embodiments. It is apparent that those skilled in the art can make various modifications and variations to the invention without departing from the spirit and scope of the invention.

## Claims

1. A Media Gateway (MG) statistic reporting method, **characterized by**, comprising the following steps:
judging whether the current statistic parameter value meets a reporting condition when a statistic parameter value on the MG changes; and
if the value meets the reporting condition, reporting the current statistic parameter value and/or the event corresponding to the reporting condition to a Media Gateway Controller (MGC).

2. The Media Gateway statistic reporting method according to claim 1, **characterized by**, further comprising the following steps:
sending, by the MGC, an event parameter to the MG, and transferring the reporting condition through the event parameter or a sub-parameter of the event parameter;
or,
presetting, by the MG, the reporting condition.

3. The Media Gateway statistic reporting method according to claim 1, **characterized in that,** the reporting condition is: the statistic parameter value deviates from a preset target value and/or resumes a preset target value.

4. The Media Gateway statistic reporting method according to claim 3,
**characterized in that,**
the deviating, by the statistic parameter value, from a preset target value comprises:
deviating upward from the target value and/or deviating downward from the target value; and
the resuming, by the statistic parameter value, the preset target value comprises: resuming upward the target value and/or resuming downward the target value.

5. The Media Gateway statistic reporting method according to claim 1, **characterized in that,** the reporting condition is: the statistic parameter value overruns a preset target value.

6. The Media Gateway statistic reporting method according to claim 5, **characterized in that,** the overrunning, by the statistic parameter value, a preset target value comprises: overrunning the target value in an ascending order and/or overrunning the target value in a descending order.

7. The Media Gateway statistic reporting method according to claim 1, **characterized in that,** the reporting condition is: the statistic parameter value enters and/or leaves a preset target value interval.

8. The Media Gateway statistic reporting method according to claim 7, **characterized in that,** the preset target value interval is: a fully closed interval or a half closed interval.

9. The Media Gateway statistic reporting method according to claim 1, **characterized in that,** the reporting condition is any combination of the following ones:
the statistic parameter value deviates from a preset target value and/or resumes a preset target value;
the statistic parameter value overruns a preset target value; and
the statistic parameter value enters and/or leaves a preset target value interval.

10. The Media Gateway statistic reporting method according to any one of claims 1 to 9, **characterized in that,** the reporting condition is combined with a time change-based reporting condition.

11. An Media Gateway (MG), comprising a reporting module adapted to report statistic parameter values or events to a Media Gateway Controller (MGC), **characterized by**, further comprising:
a judging module, adapted to judge whether a current statistic parameter value meets a reporting condition when the statistic parameter value changes, and instruct the reporting module to report the current statistic parameter value and/or an event corresponding to the reporting condition to the MGC if the statistic parameter value meets the reporting condition.

12. The MG according to claim 11, **characterized by**, further comprising:
a receiving module, adapted to receive an event parameter from the MGC and obtain the reporting condition from the event parameter or a sub-parameter of the event parameter; or adapted to receive a presetting command within the reporting condition from the MG.

13. The MG according to claim 11 or 12, **characterized in that,** the reporting condition is one or any combination of following items:
the statistic parameter value deviates from a preset target value and/or resumes a preset target value;
the statistic parameter value overruns a preset target value; and
the statistic parameter value enters and/or leaves a preset target value interval.
